# EUROPÄISCHE PATENTSCHRIFT

(11) **EP 3 766 718 B1**
(45) Veröffentlichungstag und Bekanntmachung des Hinweises auf die Patenterteilung: **04.09.2024**
(21) Anmeldenummer: 20183608.7
(22) Anmeldetag: 02.07.2020
(51) Int. Cl.: B60K 37/00, B60K 35/28, B60W 30/18, B60W 50/08

(54) **VERFAHREN ZUM BETREIBEN EINES KRAFTFAHRZEUGS**
METHOD FOR OPERATING A MOTOR VEHICLE
PROCÉDÉ DE FONCTIONNEMENT D'UN VÉHICULE AUTOMOBILE

(30) Priorität: 19.07.2019 DE 102019005061
(43) Veröffentlichungstag der Anmeldung: 20.01.2021
(60) Teilanmeldung: 24187464.3
(73) Patentinhaber: MAN Truck & Bus SE, 80995 München (DE)
(72) Erfinder: Michel, Britta, 80995 München (DE); Hutmann, Veronika, 80995 München (DE); Wölfel, Christiane, 80995 München (DE); Blank, Daniel, 80995 München (DE); Sprung, Anna Julia, 80995 München (DE)
(74) Vertreter: v. Bezold & Partner Patentanwälte - PartG mbB

(56) Entgegenhaltungen:
- EP-A1- 3 146 822
- EP-A1- 3 300 978
- DE-A1- 102006 047 311
- DE-A1- 102007 028 277
- DE-C1- 10 219 270

## Beschreibung

Die Erfindung betrifft ein Verfahren zum Betreiben eines Kraftfahrzeugs, vorzugsweise eines Nutzfahrzeugs, insbesondere zum Unterstützen des Fahrers des Kraftfahrzeugs.

Die DE 10 2004 042 865 A1 offenbart ein Verfahren zur Erfassung, Auswertung und Visualisierung von Fahrzuständen eines Kraftfahrzeuges, bei dem Betriebsparameter des Fahrzeuges erfasst und mittels einer Auswerteeinheit verarbeitet werden. Einem Fahrer werden Signale und/oder optische bzw. akustische Hinweise zur Bedienung des Kraftfahrzeuges geliefert, um dessen Fahrweise zu beeinflussen. Es ist vorgesehen, dass die Signale bzw. Hinweise unmittelbare Empfehlungen für den Fahrer zur kraftstoffverbrauchs- und/oder verschleißoptimierten Fahrweise enthalten.

Die DE 102 28 703 A1 offenbart ein Verfahren zum Betreiben von Fahrerinformationssystemen. Die an den Fahrer auszugebenden Informationen werden in Abhängigkeit von Fahrzeugbetriebsdaten ausgewählt.

Die DE 10 2006 049 965 A1 offenbart eine Vorrichtung zur interaktiven Informationsausgabe und Hilfestellung für den Benutzer eines Kraftfahrzeugs. Zur Präsentation der ausgegebenen Information ist mindestens eine aus einer Mehrzahl von verfügbaren Arten der Informationsausgabe in Abhängigkeit der Fahrsituation und/oder des Benutzerwunsches auswählbar und einsetzbar und die Bereitstellung der Information erfolgt selbsttätig in Abhängigkeit einer Fahrsituation und/oder eines vom Benutzer und/oder von der Erklärungseinheit festgelegten Zeitpunkts.

Die EP 3 300 978 A1 betrifft eine landwirtschaftliche Arbeitsmaschine mit einem Fahrerassistenzsystem, das einen Speicher zum Hinterlegen von Daten, eine Rechenvorrichtung zur Verarbeitung der in dem Speicher hinterlegten Daten und eine grafische Benutzerschnittstelle umfasst. Die Rechenvorrichtung stellt über die Benutzerschnittstelle ein Betriebsdatenfeld, das einen Anzeige-Wertebereich für einen ersten Betriebsparameter repräsentiert, und in dem Betriebsdatenfeld den aktuellen Wert für den ersten Betriebsparameter grafisch dar. Es wird vorgeschlagen, dass die Rechenvorrichtung den ersten Betriebsparameter über zumindest einen Teil des Anzeige-Wertebereichs nach einem Bewertungskriterium bewertet, das einen zweiten Betriebsparameter betrifft, und dass die Rechenvorrichtung die Bewertung des ersten Betriebsparameters basierend auf einem in einem Kennfeldsystem enthaltenen Zusammenhang zwischen dem ersten Betriebsparameter und dem zweiten Betriebsparameter vornimmt und die so ermittelten Bewertungsdaten in dem Betriebsdatenfeld grafisch darstellt.

Die DE 102 19 270 C1 offenbart ein Verfahren zur Schlupfregelung an einem landwirtschaftlichen Nutzfahrzeug. Alle Eingangssignale und Steuersignale werden in einer zentralen mikrorechnergesteuerten Elektronikbox ausgewertet. Die schlupfrelevanten Kenngrößen werden angezeigt. Mehrere Fahrmoden sind in Abhängigkeit von einstellbaren Grenzwerten wählbar. Die entsprechenden Einrichtungen zur Regelung der einzelnen Fahrzeugkomponenten werden automatisch vorrangig in Abhängigkeit von einem minimierten einstellbaren Schlupf geregelt.

Der Erfindung liegt die Aufgabe zu Grunde, eine alternative und/oder verbesserte Technik zum Unterstützen eines Fahrers eines Kraftfahrzeugs, vorzugsweise Nutzfahrzeugs, zu schaffen. Insbesondere ist die vorliegende Offenbarung darauf gerichtet, nutzfahrzeugspezifische Aspekte hinsichtlich der Unterstützung des Fahrers des Kraftfahrzeugs zu berücksichtigen.

Die Aufgabe wird gelöst durch die Merkmale des Hauptanspruchs. Vorteilhafte Weiterbildungen sind in den abhängigen Ansprüchen und der Beschreibung angegeben.

Die Erfindung betrifft ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf eine Traktion (z. B. Verhalten des Kraftfahrzeugs bzgl. eines Bodenkontakts beim Antreiben von Rädern des Kraftfahrzeugs) des Kraftfahrzeugs auf. Das Verfahren weist ein Ausgeben eines Einstellungsvorschlags für mindestens eine Fahrzeugkomponente des Kraftfahrzeugs zum Erhöhen der Traktion des Kraftfahrzeugs basierend auf dem Auswerten auf. Der Einstellungsvorschlag wird mittels einer (z. B. mobilen oder eingebauten) Mensch-Maschine-Schnittstelle ausgegeben. Das Verfahren weist ein Einstellen der mindestens einen Fahrzeugkomponente gemäß dem Einstellungsvorschlag, wenn ein Bediener des Kraftfahrzeugs den Einstellungsvorschlag mittels der Mensch-Maschine-Schnittstelle bestätigt, auf.

Das Verfahren kann ermöglichen, dass spezifische Fahrsituationen, die die Traktion des Kraftfahrzeugs betreffen, erkannt und darauf zugeschnittene Einstellmöglichkeiten zur Verbesserung der Traktion ausgegeben, vorzugsweise angezeigt, und vom Fahrer direkt bestätigt werden können. Die Auswahl der Funktionen erfolgt somit aufgrund der spezifischen Fahrsituation. Der Fahrer kann hierbei in monotonen oder besonders stressigen Situationen durch eine situationsspezifische Anzeige- und Bedienfunktion entlastet werden. Der Fahrer muss sich nicht mühsam durch Einstellungsmenüs arbeiten oder Aktivierungsschalter für die Traktion verbessernde Funktionen suchen, um die Traktion des Kraftfahrzeugs zu verbessern. Stattdessen kann ihm einfach ein passender Einstellungsvorschlag zum direkten Bestätigen selbsttätig angezeigt werden.

Es ist möglich, dass während des Ausführens des Verfahrens jederzeit eine manuelle Einstellung und/oder eine manuelle Bedienung durchgeführt werden kann, z. B. wenn eine Fahrsituation systemseitig nicht komplett oder korrekt detektiert werden kann.

Zweckmäßig kann das Erfassen, Auswerten, Ausgeben und/oder Einstellen automatisch bzw. selbsttätig erfolgen, vorzugsweise ohne dass ein manueller Eingriff erforderlich ist.

Vorzugsweise kann die Mensch-Maschine-Schnittstelle eine berührungsempfindliche Anzeigeeinrichtung aufweisen, auf der der Einstellungsvorschlag und direkt eine Bestätigungsmöglichkeit für den Einstellungsvorschlag angezeigt werden. Alternativ kann die Mensch-Maschine-Schnittstelle bspw. eine Anzeigeeinrichtung, auf der der Einstellungsvorschlag angezeigt wird, und ein der Anzeigeeinrichtung zugeordnetes Eingabeelement zur Bestätigung des Einstellungsvorschlags aufweisen.

Beispielsweise können die Daten mindestens einen Betriebsparameter des Kraftfahrzeugs, Navigationsinformationen und/oder Karteninformationen, vorzugsweise eines Navigationssystems des Kraftfahrzeugs und/oder Wetterinformationen umfassen. Zweckmäßig können die Daten ausgewertet und/oder dargestellt werden. Es ist möglich, dass die Daten sich auf einen aktuellen und/oder zukünftigen Betrieb des Kraftfahrzeugs beziehen und/oder die Daten sich auf eine aktuelle und/oder zukünftige Umgebung des Kraftfahrzeugs beziehen.

In einem Ausführungsbeispiel werden die erfassten Daten hinsichtlich eines Schlupfes der Räder ausgewertet. Alternativ oder zusätzlich werden die erfassten Daten hinsichtlich eines Untergrunds unter dem Kraftfahrzeug ausgewertet. Unter Berücksichtigung des Schlupfes oder einer Bestimmung des Untergrundtyps kann bspw. eine zuverlässige Aussage hinsichtlich einer aktuellen oder zukünftigen Traktion des Kraftfahrzeugs getroffen werden.

In einem weiteren Ausführungsbeispiel weist die mindestens eine Fahrzeugkomponente ein sperrbares Differential, vorzugsweise Querdifferential oder Längsdifferential, auf. Beispielsweise weist der Einstellungsvorschlag ein Sperren des Differentials zum Erhöhen der Traktion des Kraftfahrzeugs auf. Es kann möglich sein, dass mittels einer Sperrung des Differentials oder der Differentiale eine Traktion des Kraftfahrzeugs zum Beispiel auf unbefestigtem Untergrund und/oder am Hang verbessert werden kann.

In einem weiteren Ausführungsbeispiel weist die mindestens eine Fahrzeugkomponente eine zuschaltbare Antriebsachse und/oder einen zuschaltbaren (zum Beispiel elektrischen oder hydraulischen) Radnabenmotor des Kraftfahrzeugs auf. Beispielsweise weist der Einstellungsvorschlag ein Zuschalten der Antriebsachse und/oder des Radnabenmotors zum Erhöhen der Traktion des Kraftfahrzeugs auf. Es kann möglich sein, dass mittels einer Zuschaltung einer Antriebsachse und/oder eines oder mehrerer Radnabenmotoren eine Traktion des Kraftfahrzeugs zum Beispiel auf unbefestigtem Untergrund und/oder am Hang verbessert werden kann.

In einer Ausführungsform weist die mindestens eine Fahrzeugkomponente eine automatische Berganfahrhilfe auf. Beispielsweise weist der Einstellungsvorschlag ein Aktivieren der automatischen Berganfahrhilfe auf, vorzugsweise zum Verhindern eines Zurückrollens des Kraftfahrzeugs am Hang. Mittels der Berganfahrhilfe kann das Kraftfahrzeug sicher an einer Steigung angefahren werden.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf eine Geländetopologie und/oder einen Verkehrsfluss in der Umgebung des Kraftfahrzeugs auf. Das Verfahren weist ein Ausgeben eines Einstellungsvorschlags zum Anpassen eines Betriebs, vorzugsweise oberen und/oder unteren Geschwindigkeitsgrenzwerts, einer automatischen Geschwindigkeitsregelanlage des Kraftfahrzeugs auf. Der Einstellungsvorschlag wird mittels einer Mensch-Maschine-Schnittstelle ausgegeben. Das Verfahren kann beispielsweise ferner ein Einstellen der automatischen Geschwindigkeitsregelanlage gemäß dem Einstellungsvorschlag, wenn ein Bediener des Kraftfahrzeugs den Einstellungsvorschlag mittels der Mensch-Maschine-Schnittstelle bestätigt, aufweisen. Dies kann beispielsweise ermöglichen, dass die automatische Geschwindigkeitsregelanlage besonders kraftstoff- bzw. energieeffizient betrieben werden kann.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf eine Aktivierbarkeit eines (z. B. mechanischen, elektrischen, hydraulischen und/ oder pneumatischen) Nebenabtriebs z. B. einer Antriebseinheit des Kraftfahrzeugs auf. Das Verfahren weist ein Ausgeben eines Einstellungsvorschlags zum Aktivieren des Nebenabtriebs basierend auf dem Auswerten auf. Der Einstellungsvorschlag wird mittels einer Mensch-Maschine-Schnittstelle ausgegeben. Vorzugsweise kann das Verfahren ferner ein Aktivieren des Nebenabtriebs gemäß dem Einstellungsvorschlag, wenn ein Bediener des Kraftfahrzeugs den Einstellungsvorschlag mittels der Mensch-Maschine-Schnittstelle bestätigt, aufweisen. Somit kann der Nebenabtrieb auf einfache Art und Weise aktiviert werden. Mit Hilfe des Nebenabtriebs können bspw. unterschiedliche Aufbauten des Lastkraftwagens aktiviert werden, wie z. B. Hebebühnen, Kühlaufbauten, Absetzkipper und/oder Sonderaufbauten für Einsatzkräfte.

In einer Weiterbildung ist mittels des Nebenabtriebs ein Fahrzeugaufbau des Kraftfahrzeugs antreibbar.

In einer anderen Ausführungsform ist eine Aktivierbarkeit des Nebenabtriebs nur unter vorbestimmten Betriebsbedingungen des Kraftfahrzeugs zugelassen, zum Beispiel bei Neutralstellung eines Gangwahlhebels des Kraftfahrzeugs und/oder bei Stillstand des Kraftfahrzeugs.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf eine Aktivierbarkeit, eine Erhöhung der Fahrsicherheit durch eine Aktivierung und/oder eine Verringerung eines Verbrauchs des Kraftfahrzeugs durch eine Aktivierung eines Fahrerassistenzsystems des Kraftfahrzeugs auf (z. B. warnende/eingreifende, querführende Systeme: Spurhalte-, Abbiege-, Spurwechselassistent und/oder längsführende Systeme; (Level 1): Abstands- und/oder geschwindigkeitsregelnd (Tempomat/ ACC), Geschwindigkeitsbegrenzer (Limiter) und/oder längs- und quergeführte Systeme; (Level 2): Stauassistent, Autobahn-/Schnellstraßenassistent und/oder längs- und quergeführte Systeme; (Level 3): Staupilot, Autobahn-/Schnellstraßenpilot und/oder längs- und quergeführte Systeme während deren Ausführung Nebenaufgaben erlaubt sind; (Level 4/5): hochautomatisiertes Pilotsystem). Das Verfahren weist ein Ausgeben eines Einstellungsvorschlags zum Aktivieren des Fahrerassistenzsystems basierend auf dem Auswerten auf. Der Einstellungsvorschlag wird mittels einer Mensch-Maschine-Schnittstelle ausgegeben. Das Verfahren kann ferner ein Aktivieren des Fahrerassistenzsystems gemäß dem Einstellungsvorschlag, wenn ein Bediener des Kraftfahrzeugs den Einstellungsvorschlag mittels der Mensch-Maschine-Schnittstelle bestätigt, aufweisen. Beispielsweise kann bei der Auswertung der Daten erkannt werden, dass der Fahrer Hilfe beim Halten der Spur oder beim Anfahren benötigt. Auf einfache Weise kann der Fahrer dann die Aktivierung des entsprechenden Fahrerassistenzsystems bestätigen.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung (z. B. geplante Route des Kraftfahrzeugs und/oder Informationen von einem Navigationssystem) des Kraftfahrzeugs beziehen, auf. Das Verfahren weist ein Auswerten der erfassten Daten in Bezug auf einer vorzugsweise mittels eines Tachographen des Kraftfahrzeugs vorgegebenen (z. B. maximalen, aktuellen und/oder noch übrige) Lenkzeit des Fahrers des Kraftfahrzeugs auf. Das Verfahren weist ein Ausgeben eines Einstellungsvorschlags zum Einstellen eines Zwischenhalts, vorzugsweise auf einem Rastplatz, in einem Navigationssystem des Kraftfahrzeugs basierend auf dem Auswerten auf. Der Einstellungsvorschlag wird mittels einer Mensch-Maschine-Schnittstelle ausgegeben. Das Verfahren kann ferner ein Einstellen des Navigationssystems gemäß dem Einstellungsvorschlag, wenn ein Bediener des Kraftfahrzeugs den Einstellungsvorschlag mittels der Mensch-Maschine-Schnittstelle bestätigt, aufweisen. Somit wird auf einfache Weise ermöglicht, dass der Fahrer seine beispielsweise gesetzlich vorgeschriebene maximale Lenkzeit nicht überschreitet.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf ein Einlegen eines Rückwärtsganges des Kraftfahrzeugs auf. Das Verfahren weist ein Ausgeben eines Einstellungsvorschlags zum Aktivieren, Deaktivieren und/oder Lautstärkeanpassen einer Rückfahrwarnvorrichtung des Kraftfahrzeugs basierend auf dem Auswerten auf. Der Einstellungsvorschlag wird mittels der Mensch-Maschine-Schnittstelle ausgegeben. Das Verfahren kann zudem ein Einstellen der Rückfahrwarnvorrichtung gemäß dem Einstellungsvorschlag, wenn ein Bediener des Kraftfahrzeugs den Einstellungsvorschlag mittels der Mensch-Maschine-Schnittstelle bestätigt, aufweisen. Somit kann beispielsweise auf einfache Weise eine Lautstärke der Rückfahrwarnvorrichtung verringert werden, wenn z. B. nachts in einem Wohngebiet rangiert wird.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf Lichtverhältnisse in der Umgebung des Kraftfahrzeugs und/oder eine Lichteinstellung des Kraftfahrzeugs auf. Es kann eine Betriebsinformation einer Beleuchtung des Kraftfahrzeugs und/oder ein Einstellungsvorschlag zum Aktivieren, Deaktivieren und/oder Anpassen der Beleuchtung des Kraftfahrzeugs basierend auf dem Auswerten ausgegeben werden. Die Betriebsinformation und/oder der Einstellungsvorschlag wird mittels der Mensch-Maschine-Schnittstelle ausgegeben. Das Verfahren kann zudem ein Einstellen der Beleuchtung des Kraftfahrzeugs gemäß dem Einstellungsvorschlag, wenn ein Bediener des Kraftfahrzeugs den Einstellungsvorschlag mittels der Mensch-Maschine-Schnittstelle bestätigt, aufweisen. Somit kann beispielsweise auf einfache Weise eine Lichteinstellung des Kraftfahrzeugs vorgenommen werden.

Bspw. kann der Einstellungsvorschlag zum Aktivieren, Deaktivieren und/oder Anpassen einer (Außen-)Warnleuchte, einer Außenbeleuchtung und/oder einen Innenbeleuchtung ausgegeben werden. Die Außenwarnleuchte kann vorzugsweise eine Warnblinkanlage und/oder eine Rundumkennleuchte (z. B. bei Schwertransport) aufweisen. Die Außenbeleuchtung kann eine Laderaumbeleuchtung, einen Arbeitsscheinwerfer (z. B. zusätzliche Außenleuchten), ein Standlichtscheinwerfer, einen Tagfahrscheinwerfer, einen Fernlichtschweinwerfer, einen Nebelscheinwerfer, eine Rangierleuchte, eine Positionsleuchte (z. B. zusätzliche Außenleuchten), eine Winterdienstbeleuchtung (z. B. kann das Fahrzeug abhängig von der Ausstattung mit zusätzlichen Außenleuchten ausgerüstet sein) aufweisen. Die Innenbeleuchtung kann einen Innenraumbeleuchtung und/oder eine Ambientebeleuchtung (z. B. Nachtbeleuchtung wie eine Dachhimmelbeleuchtung) aufweisen.

Es ist möglich, dass beim Auswerten ermittelt wird, dass schlechte Sichtverhältnisse, Dunkelheit, Nacht und/oder Nebel herrschen. Der Einstellungsvorschlag kann dann bspw. das Aktivieren der Außenbeleuchtung und/oder der Ambientebeleuchtung aufweisen.

Es ist auch möglich, dass beim Auswerten ermittelt wird, dass eine Fehlfunktion des Kraftfahrzeugs vorliegt, das Kraftfahrzeug auf einem Standstreifen einer Straße steht und/oder ein Stau oder eine Gefahrenstelle vorausliegt. Der Einstellungsvorschlag kann dann bspw. das Aktivieren der Außenwarnleuchte aufweisen.

Es ist auch möglich, dass beim Auswerten ermittelt wird, dass das Kraftfahrzeug rangiert oder beladen wird. Der Einstellungsvorschlag kann dann bspw. das Aktivieren der Rangierleuchte oder der Laderaumbeleuchtung aufweisen.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf einen Betrieb und/oder eine gewünschte Aktivierung eines Wartungssystem (z. B. Prüfung ob vorbestimmte Bedingung erfüllt ist) des Kraftfahrzeugs auf. Es kann eine Betriebsinformation des Wartungssystems und/oder ein Einstellungsvorschlag zum Aktivieren, Deaktivieren und/oder Anpassen eines Betriebs des Wartungssystems des Kraftfahrzeugs basierend auf dem Auswerten ausgegeben werden. Die Betriebsinformation und/oder der Einstellungsvorschlag wird mittels der Mensch-Maschine-Schnittstelle ausgegeben. Das Verfahren kann zudem ein Einstellen des Wartungssystems des Kraftfahrzeugs gemäß dem Einstellungsvorschlag, wenn ein Bediener des Kraftfahrzeugs den Einstellungsvorschlag mittels der Mensch-Maschine-Schnittstelle bestätigt, aufweisen. Somit kann beispielsweise auf einfache Weise eine Wartung des Kraftfahrzeugs vorgenommen werden.

Bspw. kann die Betriebsinformation oder der Einstellungsvorschlag zum Aktivieren, Deaktivieren und/oder Anpassen eines elektrischen oder sonstigen Wartungssystems ausgegeben werden.

Zum Beispiel kann hier ein Batteriewächter einbezogen werden, der bspw. bei stehendem Motor den Ladezustand der Batterien überwacht und warnt, wenn zu viel elektrische Energie verbraucht wurde und bspw. die Gefahr besteht, dass das Fahrzeug nicht mehr gestartet werden kann (ggf. Betriebsinformation).

Es ist ebenfalls möglich, dass ein Lichttest einbezogen wird. Bspw. kann mit dem Lichttest eine Funktionsfähigkeit der Außenbeleuchtung am Kraftfahrzeug und/oder am Anhänger oder Sattelauflieger überprüft werden. Als vorbestimmte Bedingung beim Auswerten kann der Lichttest bspw. bei Fahrzeugübernahme, nach einem Wechsel eines Beleuchtungsmittels, einer Änderung einer Anzahl von Beleuchtungsmitteln, nach einem Stillstand des Kraftfahrzeugs länger als eine vorbestimmte Zeitdauer und/oder nach einem Anschließen eines Aufbaus aktiviert oder durchgeführt werden (ggf. Betriebsinformation oder Einstellungsvorschlag).

Vorzugsweise kann auch eine Zentralschmiereinrichtung einbezogen werden. Zweckmäßig kann die Zentralschmiereinrichtung ein Schmierintervall (als vorbestimmte Bedingung) periodisch auslösen oder vorgeben. Die Pausenzeit und die Schmiermittelmenge können bspw. nur von einer Hersteller-Service-Werkstatt eingestellt werden. Bei Bedarf oder wenn erforderlich kann eine manuelle Zwischenschmierung ausgelöst werden (ggf. Betriebsinformation oder Einstellungsvorschlag).

Bevorzugt kann auch eine Scheinwerfer-Reinigung einbezogen werden, die bspw. nach einer vorbestimmten Fahrstrecke und/oder einer vorbestimmten Fahrdauer als vorbestimmte Bedingung vorgeschlagen wird (ggf. Einstellungsvorschlag).

Es ist auch möglich, eine Regeneration eines (Diesel-)Partikelfilters einzubeziehen, um diese bspw. zu verhindern oder zuzulassen. Bspw. kann nach dem Einschalten der Zündung die Regeneration zugelassen sein (ggf. Betriebsinformation). Die automatische Regeneration kann bspw. nur vor dem Einfahren in gefährliche Bereiche oder bei Gefahr verhindert werden (ggf. Betriebsinformation oder Einstellungsvorschlag). Die Abgasanlage kann beim Regenerieren sehr heiß werden und benötigt sehr lange zum Abkühlen. Brennbare Materialien, Stäube und Dämpfe könnten entzündet werden.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf einen Betrieb eines Komfortsystems des Kraftfahrzeugs auf. Es kann eine Betriebsinformation des Komfortsystems und/oder ein Einstellungsvorschlag zum Aktivieren, Deaktivieren und/oder Anpassen eines Betriebs des Komfortsystems des Kraftfahrzeugs basierend auf dem Auswerten ausgegeben werden. Die Betriebsinformation und/oder der Einstellungsvorschlag wird mittels der Mensch-Maschine-Schnittstelle ausgegeben. Das Verfahren kann zudem ein Einstellen des Komfortsystems des Kraftfahrzeugs gemäß dem Einstellungsvorschlag, wenn ein Bediener des Kraftfahrzeugs den Einstellungsvorschlag mittels der Mensch-Maschine-Schnittstelle bestätigt, aufweisen.

Beispielsweise kann das Komfortsystem eine Klimaregulierung einbeziehen, z. B. mittels Sitzheizung, Sitzbelüftung, Klimaanlage, Luftverteilung, Fenster. Vorzugsweise kann das Komfortsystem auch mindestens ein System zur Verbesserung der Sicht aufweisen, z. B. Frontscheibenheizung oder elektrisches Sonnenrollo. So können fahrsituationsspezifisch bspw. Einstellungsvorschläge für diese Systeme selbststätig unterbreitet werden.

Ein weiterer kombinierbarer oder unabhängiger Aspekt der vorliegenden Offenbarung betrifft ebenfalls ein Verfahren zum Betreiben eines Kraftfahrzeugs, vorzugsweise eines Nutzfahrzeugs (zum Beispiel Lastkraftwagen oder Omnibus). Das Verfahren weist ein Erfassen (z. B. Empfangen, Messen, Aufzeichnen usw.) von Daten, die sich auf einen Betrieb und/oder eine Umgebung des Kraftfahrzeugs beziehen, auf. Das Verfahren weist ein Auswerten der erfassten Daten in Bezug auf einen Betrieb eines Schnittstellensystems des Kraftfahrzeugs auf. Es kann eine Betriebsinformation des Schnittstellensystems (z. B. Anhänger, Ladebordwand, Niveauregulierungssystem, LKW-Aufbau) und/oder ein Einstellungsvorschlag zum Aktivieren, Deaktivieren und/oder Anpassen eines Betriebs des Schnittstellensystems des Kraftfahrzeugs basierend auf dem Auswerten ausgegeben werden. Die Betriebsinformation und/oder der Einstellungsvorschlag wird mittels der Mensch-Maschine-Schnittstelle ausgegeben. Das Verfahren kann zudem ein Einstellen des Schnittstellensystems des Kraftfahrzeugs gemäß dem Einstellungsvorschlag, wenn ein Bediener des Kraftfahrzeugs den Einstellungsvorschlag mittels der Mensch-Maschine-Schnittstelle bestätigt, aufweisen.

Bspw. kann das Schnittstellensystem ein Tiefkuppelsystem, eine Ladebordwand, ein Niveauregulierungssystem oder einen LKW-Aufbau aufweisen. Beim Tiefkuppelsystem kann bspw. eine Kontrollleuchte nur angezeigt werden, wenn die Anhängerkupplung geschlossen ist, unabhängig davon, ob ein Anhänger angekoppelt ist oder nicht (ggf. Betriebsinformation). Die Ladebordwand kann bspw. geöffnet, geschlossen, abgesenkt oder angehoben werden (ggf. Betriebsinformation oder Einstellungsvorschlag), wenn das Fahrzeug steht. Mittels des Niveauregulierungssystems kann bspw. eine Höhe des hinteren Teils des Fahrzeugs (Hinterachse(n)) eingestellt werden. Die Niveauregelung kann bspw. abgeschaltet werden, wenn das automatische Regeln des Niveaus unterbunden werden soll (ggf. Betriebsinformation oder Einstellungsvorschlag).

Es ist auch möglich, dass ein Infotainment-System (z. B. Radio, Navigation und/oder Kommunikation) des Kraftfahrzeugs fahrsituationsspezifisch anpassbar ist, insbesondere selbsttätig.

In einem Ausführungsbeispiel ist eine Art, ein Umfang und/oder ein Inhalt der Ausgabe des Einstellungsvorschlags und/oder der Mensch-Maschine-Schnittstelle von einem Bediener des Kraftfahrzeugs anpassbar. Vorzugsweise kann die Anpassung in einem zwischen unterschiedlichen Kraftfahrzeugen übertragbaren Nutzerprofil abspeicherbar sein.

In einem weiteren Ausführungsbeispiel wurde die Auswertung selbstlernend erstellt und/oder selbstlernend angepasst, vorzugsweise basierend auf vorangegangenen manuellen Einstellung (z. B. mittels der Mensch-Maschine-Schnittstelle), die mit vorangegangen erfassten Daten korreliert werden.

In einer Ausführungsform wurde eine Art, ein Umfang und/oder ein Inhalt der Ausgabe des Einstellungsvorschlags und/oder der Mensch-Maschine-Schnittstelle selbstlernend erstellt und/oder selbstlernend angepasst, vorzugsweise in Abhängigkeit von vorangegangen manuellen Einstellungen der Mensch-Maschine-Schnittstelle.

In einer weiteren Ausführungsform wird die Auswertung zum Erkennen von mindestens einer vorbestimmten Fahrsituationen in den Daten ausgeführt, wobei der mindestens einen vorbestimmten Fahrsituation der Einstellungsvorschlag zugeordnet ist.

Die Erfindung betrifft auch ein Kraftfahrzeug, vorzugsweise Nutzfahrzeug (z. B. Lastkraftwagen oder Omnibus), das dazu eingerichtet ist, ein Verfahren wie hierin offenbart auszuführen. Zweckmäßig kann das Kraftfahrzeug eine Erfassungseinrichtung zum Erfassen der Daten, eine Auswerteeinrichtung zum Auswerten der Daten und/oder eine Mensch-Maschine-Schnittstelle zum Ausgeben des Einstellungsvorschlags und/oder zum Bestätigen des Einstellungsvorschlags aufweisen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht eines beispielhaften Kraftfahrzeugs gemäß einem Ausführungsbeispiel der vorliegenden Offenbarung; und
- Figur 2: ein beispielhaftes Verfahren zum Betreiben eines Kraftahrzeugs gemäß einem Ausführungsbeispiel der vorliegenden Offenbarung.

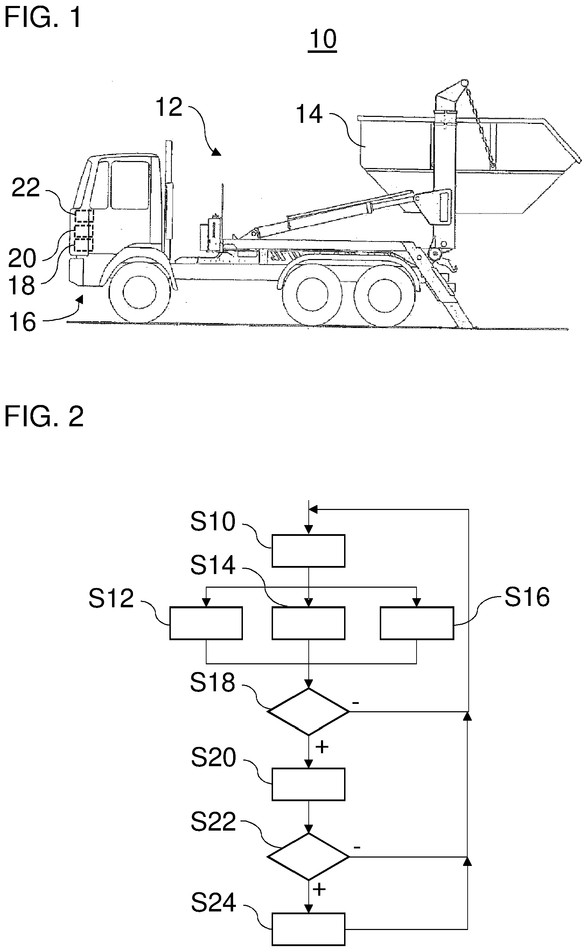

Die Figur 1 zeigt ein beispielhaft als Nutzfahrzeug ausgeführtes Kraftfahrzeug 10. Insbesondere kann das Kraftfahrzeug 10 als ein Absetzkipper-Lastkraftwagen ausgeführt sein, wie dargestellt ist. Das Kraftfahrzeug 10 kann auch anders ausgeführt sein, z. B. als Transport-Lastkraftwagen, Omnibus, Personenkraftwagen usw. Es ist möglich, dass das Kraftfahrzeug 10 dazu ausgebildet ist, teilautonom oder vollautonom betrieben zu werden.

Das beispielhafte Kraftfahrzeug 10 weist einen Nutzfahrzeugaufbau 12 auf. Der Nutzfahrzeugaufbau 12 ermöglicht das Aufladen, Transportieren und Abladen eines Containers (Absetzkippers) 14. Der Nutzfahrzeugaufbau 12 ist als rein beispielhaft anzusehen. Es könnte auch ein anderer oder gar kein Nutzfahrzeugaufbau umfasst sein. Der Nutzfahrzeugaufbau 12 kann mittels eines Nebenabtriebs einer Antriebseinheit 16, z. B. einer Brennkraftmaschine, des Kraftfahrzeugs 10 unter bestimmten Betriebsbedingungen antreibbar sein, z. B. bei Wahl einer Neutralstellung eines Gangwahlhebels und/oder bei Stillstand des Kraftfahrzeugs 10.

Das Kraftfahrzeug 10 umfasst eine schematisch angedeutete Erfassungseinrichtung 18. Die Erfassungseinrichtung 18 dient zum Erfassen von Betriebsparametern und/oder einer Umgebung des Kraftfahrzeugs 10. Bspw. kann die Erfassungseinrichtung 18 eine Umfelderfassungssensorik mit einer Radarvorrichtung, einer Lidarvorrichtung, einer Ultraschallsensorvorrichtung, einer Laserscannervorrichtung und/oder einer Kameravorrichtung usw. zum Erfassen einer Umgebung des Kraftfahrzeugs 10 aufweisen. Es können beispielsweise auch äußere Bedingungen und das Wetter (zum Beispiel Temperatur, Nässe, Glätte, Lichtverhältnisse (Helligkeit oder Dunkelheit), Tageszeit und Jahreszeit erfasst werden. Die Erfassungseinrichtung 18 kann auch eine vorzugsweise satellitengestützte Standortbestimmungsvorrichtung und/oder ein Navigationssystem aufweisen. Durch das Navigationssystem können Informationen zur Route des Kraftfahrzeugs 10 vorliegen, zum Beispiel ein Startpunkt, ein Streckenverlauf, Zwischenhalte, ein Zielpunkt, Straßentyp, ein Straßenbelag, Untergrund, Steigung, Gefälle, Baustellen usw. Die Erfassungseinrichtung 18 kann auch unterschiedliche Sensorik zum direkten oder indirekten Erfassen von Betriebsparametern des Kraftfahrzeugs 10 aufweisen. Beispielsweise können eine Geschwindigkeit, eine Beschleunigung, eine Bremskraft, ein Reibwert der Räder, eine Motordrehzahl, ein Beladungszustand des Kraftfahrzeugs, eine Größe und/oder Füllmenge eines Tanks des Kraftfahrzeugs 10 erfasst werden. Die Erfassungseinrichtung 18 kann eine Kommunikationsschnittstelle aufweisen, mit der die gewünschten Daten hinsichtlich des Betriebs und/oder der Umgebung des Kraftfahrzeugs 10 empfangen werden können, zum Beispiel von anderen Kraftfahrzeugen, der Infrastruktur, dem Internet oder einer zentralen Leitstelle.

Das Kraftfahrzeug 10 weist ferner eine Auswerteeinrichtung 20 und eine Mensch-Maschine-Schnittstelle 22 auf.

Mittels der Auswerteeinrichtung 20 werden die von der Erfassungseinrichtung 18 erfassten Daten ausgewertet. Bspw. kann die Auswerteeinrichtung 20 versuchen, eine vorbestimmte Fahrsituation des Kraftfahrzeugs 10 in den erfassten Daten zu erkennen und dem Fahrer des Kraftfahrzeugs 10 einen zur erkannten Fahrsituation passenden Einstellungsvorschlag zum Einstellen einer Fahrzeugkomponente des Kraftfahrzeugs 10 zu unterbreiten, wie hierin z. B. unter Bezugnahme auf Fig. 2 noch im Detail beschrieben ist. Es ist möglich, dass die Auswerteeinrichtung 20 zumindest teilweise nicht im Kraftfahrzeug 10 installiert ist, sondern z. B. zentral auf einem Server, der in Kommunikationsverbindung mit dem Kraftfahrzeug 10 steht.

Die Mensch-Maschine-Schnittstelle 22 kann mindestens eine visuelle, haptische und/oder akustische Vorrichtung zur Ausgabe von Informationen an den Fahrer des Kraftfahrzeugs 10 aufweisen. Die Mensch-Maschine-Schnittstelle 22 kann mindestens eine haptische, akustische und/oder visuelle Vorrichtung zum Eingeben von Informationen für den Fahrer des Kraftfahrzeugs 10 aufweisen. Zweckmäßig kann die Mensch-Maschine-Schnittstelle 22 eine berührungsempfindliche Anzeigeeinrichtung und/oder eine Anzeigeeinrichtung und separat dazu angeordnete Eingabeelemente aufweisen. Es kann auch möglich sein, Eingaben über Spracheingabe zu tätigen.

Die Mensch-Maschine-Schnittstelle 22 kann im Kraftfahrzeug 10 eingebaut sein, z. B. hinter dem Lenkrad als Fahrerkonsole oder an einer anderen Position im Armaturenbrett des Kraftfahrzeugs 10. Es ist möglich, dass die Mensch-Maschine-Schnittstelle für den Fahrer des Kraftfahrzeugs 10 in der Position (nach oben/unten, links/rechts) und/oder der Ausrichtung anpassbar ist, z. B. höhenverstellbar und/oder schwenkbar. So kann eine ergonomisch angepasste Sicht auf die Mensch-Maschine-Schnittstelle 22 ermöglicht werden. Die Mensch-Maschine-Schnittstelle 22 kann bspw. Teil eines Infotainment-Systems des Kraftfahrzeugs 10 sein. Es ist auch möglich, dass die Mensch-Maschine-Schnittstelle 22 ein mobiles Endgerät, wie z. B. ein Smartphone, einen Tablet-PC oder ein Laptop aufweist, das mit einer geeigneten Schnittstelle (z. B. kabellos oder kabelgebunden) der Mensch-Maschine-Schnittstelle 22 verbindbar ist.

Die Mensch-Maschine-Schnittstelle 22 kann vorliegend derart ausgebildet sein, dass der Fahrer immer genau die Information(en) erhält, die er zu einem bestimmten Zeitpunkt auch tatsächlich benötigt. Daher kann eine Reduktion der visuellen Anzeigen auf das Nötigste bzw. das Ausblenden von überflüssigen Anzeigen von großer Bedeutung sein. Bedienelemente und Informationen, welche nicht fahrnotwendig oder für den Fahrer ablenkend sind, können z. B. je nach Fahrmodus - manuell oder automatisiert - gesperrt oder ausgeblendet werden. Umgekehrt können wichtige Funktionen ebenso eingeblendet und hervorgehoben werden. Das Informationsangebot kann so zweckmäßig flexibel der jeweiligen Situation angepasst sein. Bezugnehmend auf das autonome Fahren und die fünf Automatisierungsgrade 1-5 (Stufe 1: Assistiertes Fahren, Stufe 2: Teilautomatisiertes Fahren, Stufe 3: Hochautomatisiertes Fahren, Stufe 4: Vollautomatisiertes Fahren, Stufe 5: Autonomes Fahren) können situative Einstellungen z. B. wie folgt aussehen. Bei Stufe 0-2 liegt ein Fokus auf der Anzeige von "Standard"-Kraftfahrzeug-Funktionen zum Fahren. Ab Stufe 3 wird eine Anzeige von Fahrmanövern und Möglichkeiten für Nebenaufgaben (z. B. Bürotätigkeiten) angezeigt. Je nach Situation oder auch auf Fahrerwunsch kann eine gesamte Anzeige der Mensch-Maschine-Schnittstelle 22 auch schwarz werden, sodass der Fahrer sich ausschließlich auf das Fahren konzentrieren kann.

Mit Blick auf die Mensch-Maschine-Schnittstelle 22 kann es wichtig sein, dem Anwender ein möglichst einfaches System zu bieten und z. B. unnötige Komplexität der Anzeigen zu vermeiden, sodass der Anwender sich bspw. nicht lange einlesen muss. So kann der Fahrer entlastet werden und gleichzeitig dessen Leistungsfähigkeit gesteigert werden. Bei der Bedienbarkeit und der Gestaltung der Anzeige der Mensch-Maschine-Schnittstelle 22 können z. B. Tablet-PCs oder Smartphones als Vorbild dienen, da deren Anzeige- und Eingabelogik dem Fahrer bereits bekannt sein können. Der Fahrer kann also über die Mensch-Maschine-Schnittstelle 22 die Möglichkeit haben, über ein geeignetes Bedienelement zu verschiedenen, gewünschten Fahrfunktionen und Informationen zu gelangen. Die Eingabe und Abfrage von Informationen kann über verschiedene Modalitäten möglich sein, z. B. über (haptisches) Touch, Dreh-Drücksteller, Taster, Schalter, andere Hardware, Sprache oder Geste. Da sich der Aufbau der Bedienelemente an den Systemen moderner Geräte wie Smartphones oder Tablets orientieren kann, ist es möglich, z. B. auch eine Art "Homebutton" sowie weitere, bereits bekannte haptische und sensorische Funktionen sowie Auswahlmöglichkeiten in die Mensch-Maschine-Schnittstelle 22 zu integrieren. Zur besseren Übersicht können z. B. auch Menüstrukturen/- bäume abgebildet werden, um eine schnelle Auswahl von relevanten Informationen zu ermöglichen. Möglich kann auch der nachträgliche Kauf oder die Freischaltung von zusätzlichen Anwendungen und Funktionen sein, die von der Mensch-Maschine-Schnittstelle 22 ausgegeben und/oder vom Fahrer mittels der Mensch-Maschine-Schnittstelle 22 bedient werden können. Verschiedene Typen von Kraftfahrzeugen können die gleiche Mensch-Maschine-Schnittstelle 22 jedoch unterschiedliche Benutzeroberflächen mit den jeweils Fahrzeugtyp-spezifischen Funktionen aufweisen (z. B.: Bus hat Fahrschein-System, Lastkraftwagen hat Funktionen zum Nutzfahrzeugaufbau 12).

Das beschriebene Anzeige- und Bedienkonzept kann auch für das Infotainment in (z. B. Reise-)Bussen angewandt werden, um den Passagieren ein individuelles Informationsangebot zu bieten. Der Busunternehmer hat die Möglichkeit, über einen Fahrzeugserver seinen Gästen Filme, elektronische Magazine oder interaktive Spiele und Fotos (vom letzten Zwischenstopp) auf ihren Smartphones oder Tablets anzubieten. Der Fahrer kann ebenso wie ein Reiseleiter die verschiedenen Entertainmentfunktionen je nach Situation (z. B. Sicherheitsinformationen zu Beginn der Reise) zentral verwalten.

Es ist auch möglich, dass der Fahrer über die Mensch-Maschine-Schnittstelle 22 Nebentätigkeiten ausführen kann. So kann z. B. bei autonomen Fahrten ab Stufe 3 die Mensch-Maschine-Schnittstelle 22 als Arbeitsmedium sowie auch als Kommunikations- und Entertainmentsystem genutzt werden. Die Mensch-Maschine-Schnittstelle 22 kann als Arbeitsmedium für Bürotätigkeiten dienen, z. B. um Frachtpapiere auszufüllen, Fahrtziele zu disponieren, Abrechnungen vorzubereiten, E-Mails zu lesen oder zu versenden usw. Die Mensch-Maschine-Schnittstelle 22 kann als Kommunikations- und Entertainmentsystem zur (Freizeit-)Beschäftigung, z. B. Interaktion mit anderen Fahrern, Social-Media, Filme, Spiele usw., dienen. Bspw. können auch Anzeigeinhalte der Mensch-Maschine-Schnittstelle 22 mit anderen Personen nach Freigabe geteilt werden (z. B. mit Disponenten, Fahrerkollegen). Der Kommunikationspartner sollte dabei berechtigt sein, die Inhalte zu sehen (kann z. B. vom System geprüft werden).

Es kann ferner möglich sein, eine Anzeige der Mensch-Maschine-Schnittstelle 22 als eine "Durchsicht" zur Sichterweiterung zu nutzen. Ein von dem Fahrer schlecht einsehbarer Bereich kann über eine Kameravorrichtung erfasst und auf einer Anzeige dargestellt werden, um z. B. Kollisionen mit anderen Verkehrsteilnehmern zu vermeiden. Es können auch andere Bereiche um das Kraftfahrzeug 10 über eine Kameravorrichtung erfasst und angezeigt werden (z. B. Seiten-, Rück- oder Rampenkamera). Die Sichterweiterung kann z. B. während der Fahrt, im Stand oder bei Abbiegemanövern verwendet werden.

Die Figur 2 zeigt ein beispielhaftes Verfahren zum Betreiben eines Kraftfahrzeugs. Das Verfahren ist z. B. mittels des Kraftfahrzeugs 10 von Figur 1 ausführbar und wird daher ohne eine Beschränkung auf dieses Ausführungsbeispiel zu implizieren anhand dieses Kraftfahrzeugs 10 erläutert.

In einem Verfahrensschritt S10 werden Daten z. B. von der Erfassungseinrichtung 18 erfasst. Die Daten können sich auf die Umgebung und/oder den Betrieb des Kraftfahrzeugs 10 beziehen. Die Daten können dann in unterschiedlicher Hinsicht in den Verfahrensschritten S12, S14, S16 ausgewertet werden, z. B. von der Auswerteeinrichtung 20. Es wird darauf hingewiesen, dass die Verfahrensschritte S12, S14 und S16 alternativ oder zusätzlich zueinander ausgeführt werden können.

Im Verfahrensschritt S12 können die Daten in Bezug auf eine Traktion des Kraftfahrzeugs 10 ausgewertet werden, d.h. vorzugsweise wie sich die Räder des Kraftfahrzeugs 10 auf dem Untergrund aktuell oder zukünftig verhalten. Bspw. können die erfassten Daten hinsichtlich eines Schlupfes der Räder (z. B. Drehzahlschlupf zwischen verschiedenen Achsen und/oder Rädern einer Achse) ausgewertet werden. Die erfassten Daten können bspw. auch hinsichtlich einer Identifizierung oder Eingruppierung des Untergrunds ausgewertet werden.

Im Verfahrensschritt S14 können die Daten in Bezug auf einen Kraftstoff- und/oder Energieverbrauch des Kraftfahrzeugs ausgewertet werden. Beispielsweise kann eine Information zur vorausliegenden Geländetopologie und/oder zum Verkehrsfluss in der Umgebung des Kraftfahrzeugs 10 ausgewertet werden. Die Informationen können bspw. über die Kommunikationsschnittstelle empfangen, vom Navigationssystem bereitgestellt oder von der Umfelderfassungssensorik erfasst werden.

Im Verfahrensschritt S16 können die Daten in Bezug auf eine Aktivierbarkeit eines (z. B. mechanischen) Nebenabtriebs einer Antriebseinheit des Kraftfahrzeugs 10 ausgewertet werden. Bspw. kann der Nebenabtrieb, wenn aktiviert, den Nutzfahrzeugaufbau 12 antreiben. Die Aktivierung des Nebenabtriebs ist allerdings nur unter vorbestimmten Betriebsbedingungen des Kraftfahrzeugs 10 möglich. Beispielsweise kann der Nebenabtrieb nur aktiviert werden, wenn der Schalthebel eines (zum Beispiel Automatik-)Getriebes auf einer vorbestimmte Stellung (zum Beispiel Neutralstellung) steht und/oder das Kraftfahrzeug 10 stillsteht.

Die Auswertung in den Schritten S12, S14 und S16 erfolgt insbesondere derart, dass versucht wird, die Daten zu vorbestimmten Fahrsituationen zuzuordnen bzw. vorbestimmte Fahrsituationen in den Daten zu erkennen. Eine vorbestimmte Fahrsituation könnte in Bezug auf den Verfahrensschritt S12 bspw. in einem vorgegebenen Schlupf bestehen, z. B. auch in Kombination oder alternativ mit weiteren Parametern wie bspw. einer Bewegungsrichtung, einer Geschwindigkeit, einer Beschleunigung und/oder einer Neigung des Kraftfahrzeugs 10. Für den Verfahrensschritt S14 kann eine vorbestimmte Fahrsituation darin bestehen, dass sich das Kraftfahrzeug 10 einer Steigung mit einem anschließenden Gefälle nähert oder eine sehr hohe Verkehrsdichte in der Umgebung des Kraftfahrzeugs 10 besteht. Eine vorbestimmte Fahrsituation könnte in Bezug auf den Verfahrensschritt S16 darin bestehen, dass der Schalthebel des Getriebes in die vorbestimmte Stellung geschaltet wurde, z. B. auch in Kombination mit weiteren Parametern wie bspw. einem Stillstand des Kraftfahrzeugs 10 oder einem Erreichen eines (End- oder Zwischen-)Ziels eines Routenverlaufs des Navigationssystems.

Es ist möglich, dass die Auswertung gemäß einem der Schritte S12, S14, S16 oder eines zusätzlichen oder alternativen Auswertungsschritts selbstlernend mittels künstlicher Intelligenz erstellt wurde und/oder selbstlernend mittels künstlicher Intelligenz anpassbar ist. Bspw. kann die Auswerteeinrichtung 20 eine vorangegangene manuelle Einstellung durch den Fahrer mittels der Mensch-Maschine-Schnittstelle 22, die (stets oder häufig) mit vorangegangen erfassten Daten korrelieren, als Einstellungsvorschlag für die vorbestimmte Fahrsituation, die durch die korrelierenden Daten gekennzeichnet ist, selbsttätig lernen.

Im Verfahrensschritt S18 kann zweckmäßig geprüft werden, ob in den Schritten S12, S14 oder S16 eine vorbestimmte Fahrsituation in den erfassten Daten erkannt wurde bzw. ob den erfassten Daten eine vorbestimmte Fahrsituation zugeordnet werden konnte. Wenn keine vorbestimmte Fahrsituation erkannt wurde (-), kann das Verfahren weiter mit der Datenerfassung im Schritt S10 fortgeführt werden. Wenn eine vorbestimmte Fahrsituation erkannt wurde (+), kann das Verfahren mit einem Schritt S20 fortgeführt werden.

Im Verfahrensschritt S20 kann zunächst basierend auf der vorbestimmten Fahrsituation eine Einstellungsvorschlag für mindestens eine Fahrzeugkomponente des Kraftfahrzeugs 10 ausgewählt werden. Bspw. kann der Einstellungsvorschlag der vorbestimmten Fahrsituation zugeordnet sein. Der Einstellungsvorschlag für die mindestens eine Fahrzeugkomponente basiert auf dem jeweiligen Auswerteschritt S12, S14 oder S16, in dem die vorbestimmte Fahrsituation erkannt wurde.

Wenn bspw. im Schritt S12 eine Fahrsituation erkannt wird, in der eine erhöhte Traktion des Kraftfahrzeugs 10 wünschenswert ist, kann der Einstellungsvorschlag derart sein, dass der Einstellungsvorschlag die Anpassung einer Einstellung einer Fahrzeugkomponente vorsieht, durch die sich die Traktion des Kraftfahrzeugs 10 erhöht. Beispielsweise kann bei einem z. B. erhöhten Schlupf der Räder des Kraftfahrzeugs 10 ein Sperren eines Differentials des Kraftfahrzeugs 10 vorgeschlagen werden. Zunächst kann das Sperren der Längssperre(n) und danach das Sperren der Quersperre(n) vorgeschlagen werden. Es ist auch möglich, dass das Zuschalten einer zuschaltbaren Antriebsachse und/oder das Zuschalten von bspw. elektrischen oder hydraulischen Radnabenmotoren vorgeschlagen wird. In einer anderen Situation liegt eine große Steigung vor, das Kraftfahrzeug 10 kommt zum Stillstand. Beim Lösen der Betriebsbremse rollt das Kraftfahrzeug 10 sofort zurück. Der Fahrer bremst das Kraftfahrzeug 10 sofort, sodass das Kraftfahrzeug 10 wieder stillsteht. In dieser Situation kann der Einstellungsvorschlag bspw. darin bestehen, dass eine Aktivierung einer automatischen Berganfahrhilfe bzw. eine Kletterbremse vorgeschlagen wird.

Im Schritt S14 kann bspw. eine Fahrsituation erkannt werden, bei der eine automatische Geschwindigkeitsregelanlage des Kraftfahrzeugs 10 aktiviert ist und eine hohe Leistungs- oder Geschwindigkeitsschwankung aufgrund der vorausliegenden Geländetopologie (z. B. Steigung mit anschließendem Gefälle) oder einer hohen Verkehrsdichte zu erwarten ist. Der ausgewählte Einstellungsvorschlag gemäß Schritt S20 kann dann bspw. eine verbrauchsverringernde Einstellung der automatischen Geschwindigkeitsregelanlage aufweisen. Z. B. kann eine Vergrößerung (oder Verkleinerung) der Geschwindigkeitsspreizung, d.h. eine Anpassung des unteren und/oder oberen Geschwindigkeitsgrenzwerts, für die automatische Regelung der Geschwindigkeit des Kraftfahrzeugs durch die Geschwindigkeitsregelanlage vorgeschlagen werden.

Wenn bspw. die Erfüllung vorbestimmter Betriebsbedingungen zur Aktivierung des Nebentriebs in Schritt S16 erkannt wird, kann der Einstellungsvorschlag gemäß Schritt S20 eine Aktivierung des Nebenabtriebs aufweisen.

Der der vorbestimmten Fahrsituation zugeordnete Einstellungsvorschlag wird dann noch im Verfahrensschritt S20 mittels der Mensch-Maschine-Schnittstelle 22 an den Fahrer des Kraftfahrzeugs 10 ausgegeben.

Zusätzliche oder alternative Auswertungsschritte zu den Schritten S12, S14 und S16 können bspw. darin bestehen, die erfassten Daten in Bezug auf eine Aktivierbarkeit eines Fahrerassistenzsystems (z. B. Spurhalteassistent, Anfahrassistent) zum Beispiel zur Erhöhung der Fahrsicherheit des Kraftfahrzeug auszuwerten. Entsprechend kann der Einstellungsvorschlag ein Aktivieren des entsprechenden Fahrerassistenzsystems anbieten. Die Daten können bspw. auch in Bezug auf einer mittels eines Tachographen des Kraftfahrzeugs vorgegebenen (z. B. maximalen) Lenkzeit des Fahrers des Kraftfahrzeugs hin ausgewertet werden, um eine Überschreitung der Lenkzeit zu verhindern. Als Einstellungsvorschlag kann das Einstellen eines Zwischenhalts, vorzugsweise auf einem Rastplatz, in dem Navigationssystem des Kraftfahrzeugs 10 erfolgen. Die Daten können bspw. auch in Bezug auf ein Einlegen eines Rückwärtsganges des Kraftfahrzeugs ausgewertet werden. Als Einstellungsvorschlag kann bspw. ein Aktivieren, Deaktivieren und/oder Anpassen einer Lautstärke einer zweckmäßig akustischen Rückfahrwarnvorrichtung des Kraftfahrzeugs angeboten werden.

Im Rahmen der Erfindung können die Daten auch in Bezug auf weitere Systeme und Komponenten zusätzlich oder alternativ ausgewertet werden, um bspw. fahrsituationsspezifisch entsprechende Betriebsinformationen auszugeben oder Einstellungsvorschläge zu unterbreiten, die vorzugsweise in der jeweiligen Fahrsituation relevant sind. Beispielsweise kommen hierfür Lichteinstellungen, Wartungssysteme, Schnittstellensysteme und/oder Komfortsysteme des Kraftfahrzeugs in Betracht.

Wie bereits beispielhaft erläutert, kann die Ausgabe des Einstellungsvorschlags z. B. in der Art, im Umfang und/oder im ausgegebenen Inhalt von einem Benutzer der Mensch-Maschine-Schnittstelle 22, vorzugsweise dem Fahrer, individuell angepasst werden. Die Anpassungen können abgespeichert werden, bspw. in einem Nutzerprofil, das zwischen unterschiedlichen Kraftfahrzeugen übertragbar ist, z. B. gespeichert auf einer mobilen Datenspeicher wie bspw. Datenkarte, Datenstick, Smartphone, Tablet-PC usw. Im portablen Nutzerprofil können zweckmäßig weitere Daten abgespeichert sein, die bevorzugte Einstellungen des Fahrers betreffen, z. B. eine Außenspiegeleinstellung, eine Sitzeinstellung, Kameraeinstellung, Senderliste für Radiosender usw. Häufig benutzte oder wichtige Funktionen können präsenter angezeigt werden. Es ist möglich, dass das Nutzerprofil zumindest teilweise selbstlernend erstellt oder angepasst wird, z. B. basierend auf vorangegangen entsprechenden Einstellungen des Fahrers. Die Ausgabe der Mensch-Maschine-Schnittstelle kann so selbstlernend über künstliche Intelligenz an die Vorlieben und Gewohnheiten des Fahrers in spezifischen Situationen angepasst werden (z. B.: Struktur der Menüs, Favoriten, Größe einzelner Optionen/Buttons je nach Häufigkeit der Nutzung).

Zusätzlich wird mit der Ausgabe des Einstellungsvorschlags eine Bestätigungsmöglichkeit über die Mensch-Maschine-Schnittstelle 22 für den Fahrer bereitgestellt. Die Bestätigungsmöglichkeit erlaubt dem Fahrer, den Einstellungsvorschlag direkt zu bestätigen. Die Bestätigung kann bspw. visuell, akustisch oder haptisch erfolgen.

Im Verfahrensschritt S22 wird geprüft, ob eine Bestätigung für den Einstellungsvorschlag vorliegt (+) oder nicht (-), zum Beispiel innerhalb eines vorbestimmten Zeitraums oder solange die entsprechende vorbestimmte Fahrsituation andauert. Liegt keine Bestätigung vor (-) kann das Verfahren beispielsweise wieder mit dem Schritt S10 fortfahren. Liegt eine Bestätigung vor (+), kann das Verfahren mit dem Schritt S24 fortfahren.

Im Verfahrensschritt S24 wird mindestens eine Fahrzeugkomponente entsprechend dem Einstellungsvorschlag automatisch eingestellt. Gegebenenfalls kann der Fahrer des Kraftfahrzeugs 10 über eine erfolgreiche Einstellung der mindestens einen Fahrzeugkomponente mittels der Menschen-Maschine-Schnittstelle 22 informiert werden. Das Verfahren kann mit dem Schritt S10 fortfahren.

Nachfolgend sind noch einige Fallbeispiele erläutert, bei der die Techniken der vorliegenden Offenbarung vorteilhaft eingesetzt werden können.

Ein Lastkraftwagenfahrer des als Absetzkipper-Lastkraftwagen ausgeführten Kraftfahrzeugs 10 fährt auf der Autobahn und hat nur noch wenige Kilometer zum Ziel bzw. der Einsatzbaustelle. Der Automatisierungsgrad wird von hochautomatisiertes Fahren (Stufe 3) auf manuelle Fahrt (Stufe 0) umgestellt und der Fahrer übernimmt nach haptischer und akustischer Aufforderung der Anzeige- und Bedieneinheit die Fahrzeugführung. Die neue Situation wird erkannt, wodurch alle nichtrelevanten Informationen und Funktionen (welche bei der automatisierten Fahrt nützlich oder sogar wichtig waren) automatisch von der Mensch-Maschine-Schnittstelle 22 ausgeblendet werden, um den Fahrer von seiner Fahraufgabe nicht unnötig abzulenken. Kurz vor Erreichen der Baustelle ruft der Fahrer via Sprachsteuerung mögliche Fahrfunktionen und Bedienmöglichkeiten auf, welche er auf dem Baustellengelände benötigt und die ihm das Steuern des Kraftfahrzeugs 10 unter den neuen Gegebenheiten erleichtern. Das Kraftfahrzeug 10 fährt auf die Baustelle. Der Untergrund besteht aus Schotter, ist also unbefestigt. Der Fahrer hat die Aufgabe, den geladenen Schutt inklusive Container 14 abzuladen. Dazu muss er zunächst einen Schuttberg hochfahren. Beim langsamen Hochfahren des Berges erkennt die Auswerteeinrichtung 20 einen erhöhten Schlupf der Räder und bietet die Längssperren der Achsen an. Die Quersperren der Hinterachsen sind noch nicht aktivierbar, werden aber angezeigt mit dem Hinweis, dass zunächst die Längssperren (erst die vordere, dann die hintere) aktiviert werden müssen. Der Fahrer aktiviert sogleich die hintere Längssperre, wobei die vordere automatisch als erstes gesperrt wird. Nun wären auch die Quersperren aktivierbar, allerdings reichen die bereits aktivierten Längssperren soweit aus, dass die Reifen nicht durchdrehen. An einer Stelle ist die Steigung sehr stark und das Kraftfahrzeug 10 kommt zum Stillstand. Beim Lösen der Betriebsbremse (Fußpedal) rollt das Kraftfahrzeug 10 sofort zurück. Der Fahrer tritt erneut auf die Bremse und das Kraftfahrzeug 10 bleibt stehen. Über die Mensch-Maschine-Schnittstelle wird dem Fahrer die "Kletterbremse" bzw. die Berganfahrhilfe vorgeschlagen, da durch die Fahrzeugdaten und das Fahrverhalten erkannt wurde, dass es akute Probleme beim Anfahren am Berg gibt. Der Fahrer bestätigt die Funktion. Das Kraftfahrzeug 10 rollt nach Lösen der Bremse nicht zurück und kann damit wieder anfahren. Das Kraftfahrzeug 10 ist schließlich oben am Schuttberg am Abladeort des Containers 14 angekommen. Das Kraftfahrzeug 10 steht. Der Fahrer hat den Gang "N" eingelegt und die Auswerteeinrichtung 20 erkennt, dass es nun möglich ist, den Nebenabtrieb zu betätigen. Die Funktion wird über die Mensch-Maschine-Schnittstelle 22 vorgeschlagen. Der Fahrer bestätigt die Aktivierung des Nebenabtriebs und kann nun über die Bedienelemente und/oder eine integrierte App des Aufbauherstellers den Container 14 absetzen.

Ein Fahrer tritt früh morgens seinen Dienst im Verteilerzentrum an. Er bekommt ein typisches Verteilerfahrzeug der Flotte seines Spediteurs mit Laderampe zugeteilt. Meistens hat er jeden Tag ein anderes Fahrzeug. Der Fahrer startet seine Schicht, indem er das Kraftfahrzeug abholt und die erste Ladung Waren im Verteilerzentrum einlädt. Er steigt in das Kraftfahrzeug ein, steckt seine Fahrerkarte ein und schaltet die Zündung ein. Das Fahrzeug begrüßt ihn mit seinem Namen, da es ihn über sein Nutzerprofil erkannt hat. Durch das individuelle Profil sind im Fahrzeug sogleich alle vom Fahrer vorgenommenen Einstellungen vorhanden, wie z. B. Anzeigeeinstellungen, Sprache, Favoritenfunktionen und/oder die für den Fahrer freigeschaltenen Apps des Spediteurs. Es wird gefragt, ob der Fahrer eine kurze Erklärung über die Bedienung und Einstellmöglichkeiten haben möchte. Der Fahrer verneint und deaktiviert die Erklärungen, da er die Fahrzeugart nun schon öfters gefahren ist und sich nun sicher im Umgang damit fühlt. Falls er nochmal Hilfe braucht, kann er die Funktion jederzeit wieder aktivieren. Dadurch, dass bereits alles eingestellt ist, kann er sofort losfahren und spart sich damit wertvolle Arbeitszeit. Er fährt das Kraftfahrzeug aus der Parkposition und rangiert so vor das Tor zum Aufladen, dass er nur noch rückwärts heranfahren muss. Sobald er den Rückwärtsgang einlegt, ertönt laut der Warnton zum Rückwärtsfahren. Über die Mensch-Maschine-Schnittstelle 22 wird die Möglichkeit angeboten, den Ton leiser zu stellen, was er auch macht, da er danach in die Stadt fährt und der Ton sonst zu laut ist so früh am Morgen. Mit Hilfe der ebenfalls automatisch aktivierten Rückfahrkamera fährt er langsam an die Rampe heran. Nun steht das Fahrzeug an der Laderampe. Das System zeigt Optionen für die Anfahrhilfen an. Der Fahrer prüft, dass diese alle ausgeschaltet sind. Anschließend geht er über die Mensch-Maschine-Schnittstelle 22 in das Lichtmenü und schaltet das Laderampenlicht ein. Nun steigt er aus und betätigt am Heck des Kraftfahrzeugs die Laderampe und belädt das Kraftfahrzeug mit den Waren. Nachdem alles sicher verstaut ist, schließt der Fahrer die Rampe und steigt ins Fahrerhaus des Kraftfahrzeugs ein. Im Lichtmenü schaltet er das Laderampenlicht wieder aus, wechselt in das Navigationsmenü, gibt seine Route ein und startet sie. Nun werden neben der Navigationskarte auch die Anfahrhilfen wieder angezeigt, von welchen der Fahrer nun eine auswählt. Nun fährt er los zu seiner Route und beginnt die Auslieferung.

Ein Fernfahrer fährt mit seinem Fernverkehrs-Lastkraftwagen mit Auflieger auf der Autobahn seine Route über mehrere 100 km. Das Fahrzeug kann automatisiert Fahren. Der Fahrer hat gerade die automatische Geschwindigkeitsregelanlage aktiviert, die auch bei Kuppen (Hügeln) und Senken (Tälern) die Geschwindigkeit des Lastkraftwagens effizient reguliert. Durch das Navigationssystem ist bekannt, dass bald ein steiler Berg kommt. Der Fahrer wird darüber mittels der Mensch-Maschine-Schnittstelle 22 informiert. Dabei wird zugleich ein Anpassung der Geschwindigkeitsspreizung der Geschwindigkeitsregelanlage als Einstellungsvorschlag und zweckmäßig eine Erhöhung der Spreizung empfohlen. Der Fahrer nimmt die Empfehlung durch Bestätigung an der Mensch-Maschine-Schnittstelle 22 an. Der Lastkraftwagen fährt über die Länge des Berges effizienter und verbraucht so z. B. weniger Kraftstoff. Nach dem Berg bekommt der Fahrer die Meldung, dass er nun automatisiert fahren kann. Er übergibt die Fahraufgabe an das automatisierte Fahrsystem und nimmt die Hände vom Lenkrad. Die Anzeige der Mensch-Maschine-Schnittstelle 22 zeigt nun bspw. an, mit was der Fahrer sich nun beschäftigen kann. Es gibt nun bspw. die Möglichkeit, digital Frachtpapiere auszufüllen, mit anderen Fahrern der Spedition oder der Familie via Videochat oder über die dort angemeldeten sozialen Netzwerke zu kommunizieren oder auch Filme und Videos über verschiedene Plattformen anzusehen. Der Fahrer wählt ein schon zuvor angefangenes Video aus. Während er das Video ansieht, wird ein Pop-Up eingeblendet, in welchem angezeigt wird, dass seine Lenkzeit bald endet. Es wird ferner einer seiner favorisierten Rastplätze vorgeschlagen, um dort die Pause zu verbringen. Der Fahrer bestätigt den Vorschlag, woraufhin das Navigationssystem den Rastplatz als Zwischenziel mit einberechnet. Nun wechselt der Fahrer wieder zu seinem Video. Ein paar Minuten vor Ende der Automation und des Rastplatzes wird der Fahrer über das System darauf hingewiesen, dass er bald wieder selbst fahren muss. Da er noch mehrere Minuten Zeit hat, sieht er sich noch ein Video an. Wenig später kommen erneut die Warnung und der Hinweis auf das Ende der automatisierten Fahrt. Die Applikationen, die nicht während der manuellen Fahrt ausgeführt werden dürfen, werden gesperrt und mit einem Hinweis auf die Sperrung nicht mehr angezeigt. Der Fahrer richtet sich wieder seinen normalen Fahrerarbeitsplatz ein, schaut auf die wieder angezeigte Karte des Navigationssystems und übernimmt wieder die Fahraufgabe, bevor er die Abfahrt zum Rastplatz nimmt.

Ein Busfahrer fährt mit seinem Reisebus eine Reisegruppe an ein bestimmtes Ziel. Der Reisebus kann automatisiert fahren, was dem Fahrer ermöglicht, fahrfremde Tätigkeiten auszuführen. Der Bus fährt auf der Autobahn, der Fahrer steuert das Fahrzeug manuell. Es besteht das fahrgastseitige Bedürfnis, die Klimaanlage etwas herunter zu drehen. Der Fahrer navigiert über ein Eingabegerät der Mensch-Maschine-Schnittstelle unkompliziert zu den Klimaeinstellungen, wählt den Fahrgastraum aus und stellt die Temperatur etwas herunter. Der Fahrer bekommt nach einer Baustelle die Meldung, dass er nun automatisiert fahren kann. Er übergibt die Fahraufgabe an das Fahrzeug und nimmt die Hände vom Lenkrad. Die automatisierte Fahrfunktion wird erkannt, und der Inhalt der Anzeigen der Mensch-Maschine-Schnittstelle 22 wird gewechselt. Dem Fahrer wird angezeigt, was er nun über die Mensch-Maschine-Schnittstelle 22 betätigen kann. Nun ist es möglich, das Entertainmentprogramm für die Fahrgäste neu einzustellen. Der Fahrer sucht mittels der Mensch-Maschine-Schnittstelle 22 aus der Liste einer Mediathek-App eine Serie an Kurzfilmen aus, die er daraufhin startet. Die Mensch-Maschine-Schnittstelle 22 wechselt wieder in die Hauptanzeige. Die Mensch-Maschine-Schnittstelle 22 gibt dem Fahrer den Hinweis, dass er bald die vorgeschriebene Pause machen muss und fragt, ob ein Zwischenziel gefunden werden soll. Der Fahrer bestätigt und kommt zur Navigationskarte, wo verschiedene mögliche Raststätten angezeigt werden. Er wählt eine aus, woraufhin diese als Zwischenziel eingespeichert wird. Ein paar Minuten vor Ende der Automation und des Rastplatzes wird der Fahrer über die Mensch-Maschine-Schnittstelle 22 darauf hingewiesen, dass er bald wieder selbst fahren muss. Wenig später kommen erneut die Warnung und der Hinweis auf das Ende der automatisierten Fahrt und die Applikationen, die nicht während der manuellen Fahrt ausgeführt werden dürfen, werden gesperrt und mit dem Hinweis auf die Sperrung nicht mehr angezeigt. Der Fahrer richtet sich wieder seinen normalen Fahrerarbeitsplatz ein, schaut auf die wieder erschienene Karte der Navigation und übernimmt wieder die Fahraufgabe, bevor er die Abfahrt zum Rastplatz nimmt. Auf dem Rastplatz parkt er auf einem der vorgesehenen Plätze. Die Auswerteeinrichtung 20 erkennt, dass das Fahrzeug steht und bietet das Öffnen der Türen an. Der Fahrer betätigt die Funktion und die Fahrgäste steigen aus. Die Funktion bleibt weiter angezeigt. Nach der Pause steigen alle wieder ein und der Fahrer betätigt die angebotene Funktion zum Schließen der Türen. Der Fahrer wird über die Mensch-Maschine-Schnittstelle gefragt, ob die Navigation fortgesetzt werden soll. Der Fahrer bestätigt und fährt wieder los.

Die Erfindung ist nicht auf die vorstehend beschriebenen bevorzugten Ausführungsbeispiele beschränkt.

### Bezugszeichenliste

- 10: Kraftfahrzeug
- 12: Aufbau
- 14: Container (Absetzkipper)
- 16: Antriebseinheit
- 18: Erfassungseinrichtung
- 20: Auswerteeinrichtung
- 22: Mensch-Maschine-Schnittstelle
- S10-S24: Verfahrensschritte

## Patentansprüche

1. Verfahren zum Betreiben eines Kraftfahrzeugs (10), vorzugsweise eines Nutzfahrzeugs, aufweisend:
Erfassen von Daten, die sich auf einen Betrieb und/oder eine Umgebung des Kraftfahrzeugs (10) beziehen; und
Auswerten der erfassten Daten in Bezug auf eine Traktion des Kraftfahrzeugs (10);
das Verfahren ist durch die folgende Schritte gekennzeichnet:
Ausgeben eines Einstellungsvorschlags für mindestens eine Fahrzeugkomponente des Kraftfahrzeugs (10) zum Erhöhen der Traktion des Kraftfahrzeugs (10) basierend auf dem Auswerten, wobei der Einstellungsvorschlag mittels einer Mensch-Maschine-Schnittstelle (22) ausgegeben wird; und
Einstellen der mindestens einen Fahrzeugkomponente gemäß dem Einstellungsvorschlag, wenn ein Bediener des Kraftfahrzeugs (10) den Einstellungsvorschlag mittels der Mensch-Maschine-Schnittstelle (22) bestätigt.

2. Verfahren nach Anspruch 1, wobei:
die erfassten Daten hinsichtlich eines Schlupfes der Räder ausgewertet werden; und/oder
die erfassten Daten hinsichtlich eines Untergrunds unter dem Kraftfahrzeug (10) ausgewertet werden.

3. Verfahren nach Anspruch 1 oder Anspruch 2, wobei:
die mindestens eine Fahrzeugkomponente ein sperrbares Differential, vorzugsweise Querdifferential oder Längsdifferential, aufweist; und
der Einstellungsvorschlag ein Sperren des Differentials zum Erhöhen der Traktion des Kraftfahrzeugs (10) aufweist.

4. Verfahren nach einem der vorherigen Ansprüche, wobei:
die mindestens eine Fahrzeugkomponente eine zuschaltbare Antriebsachse und/oder einen zuschaltbaren Radnabenmotor des Kraftfahrzeugs (10) aufweist; und
der Einstellungsvorschlag ein Zuschalten der Antriebsachse und/oder des Radnabenmotors zum Erhöhen der Traktion des Kraftfahrzeugs (10) aufweist.

5. Verfahren nach einem der vorherigen Ansprüche, wobei:
die mindestens eine Fahrzeugkomponente eine automatische Berganfahrhilfe aufweist; und
der Einstellungsvorschlag ein Aktivieren der automatischen Berganfahrhilfe aufweist, vorzugsweise zum Verhindern eines Zurückrollens des Kraftfahrzeugs (10) am Hang.

6. Verfahren nach einem der vorherigen Ansprüche, ferner aufweisend:
Auswerten der erfassten Daten in Bezug auf eine Geländetopologie und/oder einen Verkehrsfluss in der Umgebung des Kraftfahrzeugs (10); und
Ausgeben eines Einstellungsvorschlags zum Anpassen eines Betriebs, vorzugsweise eines oberen und/oder unteren Geschwindigkeitsgrenzwerts, einer automatischen Geschwindigkeitsregelanlage des Kraftfahrzeugs (10), wobei der Einstellungsvorschlag mittels der Mensch-Maschine-Schnittstelle (22) ausgegeben wird.

7. Verfahren nach einem der vorherigen Ansprüche, ferner aufweisend:
Auswerten der erfassten Daten in Bezug auf eine Aktivierbarkeit eines Nebenabtriebs einer Antriebseinheit (16) des Kraftfahrzeugs (10); und
Ausgeben eines Einstellungsvorschlags zum Aktivieren des Nebenabtriebs basierend auf dem Auswerten, wobei der Einstellungsvorschlag mittels der Mensch-Maschine-Schnittstelle (22) ausgegeben wird.

8. Verfahren nach Anspruch 7, wobei:
mittels des Nebenabtriebs ein Fahrzeugaufbau (12) des Kraftfahrzeugs (10) antreibbar ist; und/oder
eine Aktivierbarkeit des Nebenabtriebs nur unter vorbestimmten Betriebsbedingungen des Kraftfahrzeugs (10) zugelassen ist.

9. Verfahren nach einem der vorherigen Ansprüche, ferner aufweisend:
Auswerten der erfassten Daten in Bezug auf eine Aktivierbarkeit, eine Erhöhung der Fahrsicherheit durch eine Aktivierung und/oder eine Verringerung eines Verbrauchs des Kraftfahrzeugs (10) durch eine Aktivierung eines Fahrerassistenzsystems des Kraftfahrzeugs (10); und
Ausgeben eines Einstellungsvorschlags zum Aktivieren des Fahrerassistenzsystems basierend auf dem Auswerten, wobei der Einstellungsvorschlag mittels der Mensch-Maschine-Schnittstelle (22) ausgegeben wird.

10. Verfahren nach einem der vorherigen Ansprüche, ferner aufweisend:
Auswerten der erfassten Daten in Bezug auf einer vorzugsweise mittels eines Tachographen des Kraftfahrzeugs (10) vorgegebenen Lenkzeit des Fahrers des Kraftfahrzeugs (10); und
Ausgeben eines Einstellungsvorschlags zum Einstellen eines Zwischenhalts, vorzugsweise auf einem Rastplatz, in einem Navigationssystem des Kraftfahrzeugs (10) basierend auf dem Auswerten, wobei der Einstellungsvorschlag mittels der Mensch-Maschine-Schnittstelle (22) ausgegeben wird.

11. Verfahren nach einem der vorherigen Ansprüche, ferner aufweisend:
Auswerten der erfassten Daten in Bezug auf ein Einlegen eines Rückwärtsganges des Kraftfahrzeugs (10); und
Ausgeben eines Einstellungsvorschlags zum Aktivieren, Deaktivieren und/oder Lautstärkeanpassen einer Rückfahrwarnvorrichtung des Kraftfahrzeugs (10) basierend auf dem Auswerten, wobei der Einstellungsvorschlag mittels der Mensch-Maschine-Schnittstelle (22) ausgegeben wird.

12. Verfahren nach einem der vorherigen Ansprüche, ferner aufweisend:
Auswerten der erfassten Daten in Bezug auf Lichtverhältnisse in der Umgebung des Kraftfahrzeugs (10) und/oder eine Lichteinstellung des Kraftfahrzeugs (10); und
Ausgeben einer Betriebsinformation und/oder eines Einstellungsvorschlags zum Aktivieren, Deaktivieren und/oder Anpassen einer Beleuchtung des Kraftfahrzeugs (10) basierend auf dem Auswerten, wobei die Betriebsinformation und/oder der Einstellungsvorschlag mittels der Mensch-Maschine-Schnittstelle (22) ausgegeben wird.

13. Verfahren nach einem der vorherigen Ansprüche, ferner aufweisend:
Auswerten der erfassten Daten in Bezug auf einen Betrieb und/oder eine gewünschte Aktivierung eines Wartungssystems des Kraftfahrzeugs (10); und
Ausgeben einer Betriebsinformation und/oder eines Einstellungsvorschlags zum Aktivieren, Deaktivieren und/oder Anpassen eines Betriebs des Wartungssystems des Kraftfahrzeugs (10) basierend auf dem Auswerten, wobei die Betriebsinformation und/oder der Einstellungsvorschlag mittels der Mensch-Maschine-Schnittstelle (22) ausgegeben wird.

14. Verfahren nach einem der vorherigen Ansprüche, ferner aufweisend:
Auswerten der erfassten Daten in Bezug auf einen Betrieb eines Komfortsystems des Kraftfahrzeugs (10); und
Ausgeben einer Betriebsinformation und/oder eines Einstellungsvorschlags zum Anpassen des Betriebs des Komfortsystems des Kraftfahrzeugs (10) basierend auf dem Auswerten, wobei die Betriebsinformation und/oder der Einstellungsvorschlag mittels der Mensch-Maschine-Schnittstelle (22) ausgegeben wird.

15. Verfahren nach einem der vorherigen Ansprüche, ferner aufweisend:
Auswerten der erfassten Daten in Bezug auf einen Betrieb eines Schnittstellensystems; und
Ausgeben einer Betriebsinformation und/oder eines Einstellungsvorschlags zum Anpassen des Betriebs des Schnittstellensystems des Kraftfahrzeugs (10) basierend auf dem Auswerten, wobei die Betriebsinformation und/oder Einstellungsvorschlag mittels der Mensch-Maschine-Schnittstelle (22) ausgegeben wird.

16. Verfahren nach einem der vorherigen Ansprüche, wobei:
eine Art, ein Umfang und/oder ein Inhalt der Ausgabe des Einstellungsvorschlags und/oder der Mensch-Maschine-Schnittstelle (22) von einem Bediener des Kraftfahrzeugs (10) anpassbar ist, wobei vorzugsweise die Anpassung in einem zwischen unterschiedlichen Kraftfahrzeugen (10) übertragbaren Nutzerprofil abspeicherbar ist.

17. Verfahren nach einem der vorherigen Ansprüche, wobei:
die Auswertung selbstlernend erstellt wurde und/oder selbstlernend anpassbar ist, vorzugsweise basierend auf vorangegangenen manuellen Einstellung, die mit vorangegangen erfassten Daten korreliert werden; und/oder
eine Art, ein Umfang und/oder ein Inhalt der Ausgabe des Einstellungsvorschlags und/oder der Mensch-Maschine-Schnittstelle (22) selbstlernend erstellt wurde und/oder selbstlernend anpassbar ist, vorzugsweise in Abhängigkeit von vorangegangen manuellen Einstellungen der Mensch-Maschine-Schnittstelle (22).

18. Verfahren nach einem der vorherigen Ansprüche, wobei:
die Auswertung zum Erkennen von mindestens einer vorbestimmten Fahrsituationen in den Daten ausgeführt wird, wobei der mindestens einen vorbestimmten Fahrsituation der Einstellungsvorschlag zugeordnet ist.

19. Kraftfahrzeug (10), vorzugsweise Nutzfahrzeug, das dazu eingerichtet ist, ein Verfahren nach einem der vorherigen Ansprüche auszuführen.

## Claims

1. A method for operating a motor vehicle (10), preferably a utility vehicle, comprising:
detecting data relating to an operation and/or an environment of the motor vehicle (10); and
evaluating the detected data in relation to a traction of the motor vehicle (10);
the method is **characterized by** the following steps:
outputting a setting suggestion for at least one vehicle component of the motor vehicle (10) for increasing the traction of the motor vehicle (10) based on the evaluating, wherein the setting suggestion is output by means of a human-machine interface (22); and
setting the at least one vehicle component according to the setting suggestion when an operator of the motor vehicle (10) confirms the setting suggestion by means of the human-machine interface (22).

2. The method according to claim 1, wherein:
the detected data is evaluated with respect to a slippage of the wheels; and/or
the detected data is evaluated with respect to a ground under the motor vehicle (10).

3. The method according to claim 1 or claim 2, wherein:
the at least one vehicle component comprises a lockable differential, preferably a transverse differential or a longitudinal differential; and
the setting suggestion comprises locking the differential to increase the traction of the motor vehicle (10).

4. The method according to any of the previous claims, wherein:
the at least one vehicle component comprises an engageable drive axle and/or an engageable wheel hub motor of the motor vehicle (10); and
the setting suggestion comprises engaging the drive axle and/or the wheel hub motor to increase the traction of the motor vehicle (10).

5. The method according to any of the previous claims, wherein:
the at least one vehicle component comprises an automatic hill start assist; and
the setting suggestion comprises activating the automatic hill start assist, preferably for preventing the motor vehicle (10) from rolling back on a slope.

6. The method according to any of the previous claims, further comprising:
evaluating the detected data with respect to a terrain topology and/or a traffic flow in the environment of the motor vehicle (10); and
outputting a setting suggestion for adjusting an operation, preferably an upper and/or lower speed limit, of an automatic cruise control system of the motor vehicle (10), wherein the setting suggestion is output by means of the human-machine interface (22).

7. The method according to any of the previous claims, further comprising:
evaluating the detected data with respect to an activatability of a power take-off of a drive unit (16) of the motor vehicle (10); and
outputting a setting suggestion for activating the power take-off based on the evaluating, wherein the setting suggestion is output by means of the human-machine interface (22).

8. The method according to claim 7, wherein:
a vehicle superstructure (12) of the motor vehicle (10) can be driven by means of the power take-off; and/or
an activatability of the power take-off is only permitted under predetermined operating conditions of the motor vehicle (10).

9. The method according to any of the previous claims, further comprising:
evaluating the detected data with respect to an activatability, an increase in driving safety by an activation and/or a reduction in a consumption of the motor vehicle (10) by an activation of a driver assistance system of the motor vehicle (10); and
outputting a setting suggestion for activating the driver assistance system based on the evaluating, wherein the setting suggestion is output by means of the human-machine interface (22).

10. The method according to any of the previous claims, further comprising:
evaluating the detected data with respect to a driving time of the driver of the motor vehicle (10), preferably predetermined by means of a tachograph of the motor vehicle (10); and
outputting a setting suggestion for setting an intermediate stop, preferably at a rest area, in a navigation system of the motor vehicle (10) based on the evaluating, wherein the setting suggestion is output by means of the human-machine interface (22).

11. The method according to any of the previous claims, further comprising:
evaluating the detected data with respect to an engagement of a reverse gear of the motor vehicle (10); and
outputting a setting suggestion for activating, deactivating and/or adjusting the volume of a reversing warning device of the motor vehicle (10) based on the evaluating, wherein the setting suggestion is output by means of the human-machine interface (22).

12. The method according to any of the previous claims, further comprising:
evaluating the detected data with respect to light conditions in the environment of the motor vehicle (10) and/or a light setting of the motor vehicle (10); and
outputting an operating information and/or a setting suggestion for activating, deactivating and/or adjusting a lighting of the motor vehicle (10) based on the evaluating, wherein the operating information and/or the setting suggestion is output by means of the human-machine interface (22).

13. The method according to any of the previous claims, further comprising:
evaluating the detected data with respect to an operation and/or a desired activation of a maintenance system of the motor vehicle (10); and
outputting an operation information and/or a setting suggestion for activating, deactivating and/or adjusting an operation of the maintenance system of the motor vehicle (10) based on the evaluating, wherein the operation information and/or the setting suggestion is output by means of the human-machine interface (22).

14. The method according to any of the previous claims, further comprising:
evaluating the detected data with respect to an operation of a comfort system of the motor vehicle (10); and
outputting an operation information and/or a setting suggestion for adjusting the operation of the comfort system of the motor vehicle (10) based on the evaluating, wherein the operation information and/or the setting suggestion is output by means of the human-machine interface (22).

15. The method according to any of the previous claims, further comprising:
evaluating the detected data with respect to an operation of an interface system; and
outputting an operation information and/or a setting suggestion for adapting the operation of the interface system of the motor vehicle (10) based on the evaluating, wherein the operation information and/or setting suggestion is output by means of the human-machine interface (22).

16. The method according to any of the previous claims, wherein:
a type, a scope and/or a content of the output of the setting suggestion and/or the human-machine interface (22) is customizable by an operator of the motor vehicle (10), wherein preferably the customization is storable in a user profile transferable between different motor vehicles (10).

17. The method according to any of the previous claims, wherein:
the evaluation has been created in a self-learning manner and/or is adaptable in a self-learning manner, preferably based on previous manual setting correlated with previous detected data; and/or
a type, a scope and/or a content of the output of the setting suggestion and/or the human-machine interface (22) has been created in a self-learning manner and/or is adaptable in a self-learning manner, preferably depending on previous manual settings of the human-machine interface (22).

18. The method according to any of the previous claims, wherein:
the evaluation is configured to recognize at least one predetermined driving situation in the data, wherein the setting suggestion is assigned to the at least one predetermined driving situation.

19. A motor vehicle (10), preferably utility vehicle, which is configured to perform a method according to one of the previous claims.

## Revendications

1. Procédé de fonctionnement d'un véhicule automobile (10), de préférence d'un véhicule utilitaire, ledit procédé comprenant les étapes suivantes :
acquérir des données relatives à un fonctionnement et/ou à un environnement du véhicule automobile (10) ; et
évaluer les données acquises en relation avec la traction du véhicule automobile (10) ;
le procédé étant **caractérisé par** les étapes suivantes :
délivrer une suggestion de réglage d'au moins un composant du véhicule automobile (10) afin d'augmenter la traction du véhicule automobile (10) sur la base de l'évaluation, la suggestion de réglage étant délivrée à l'aide d'une interface homme-machine (22) ; et
régler l'au moins un composant de véhicule conformément à la suggestion de réglage lorsqu'un opérateur du véhicule automobile (10) confirme la suggestion de réglage à l'aide de l'interface homme-machine (22).

2. Procédé selon la revendication 1 :
les données acquises étant évaluées en termes de patinage des roues ; et/ou
les données acquises étant évaluées en termes de sol au-dessous du véhicule automobile (10).

3. Procédé selon la revendication 1 ou la revendication 2 :
l'au moins un composant de véhicule comportant un différentiel blocable, de préférence un différentiel transversal ou un différentiel longitudinal ; et
la suggestion de réglage comportant le blocage du différentiel afin d'augmenter la traction du véhicule automobile (10).

4. Procédé selon l'une des revendications précédentes :
l'au moins un composant de véhicule comportant un essieu d'entraînement engageable et/ou un moteur de moyeu de roue engageable du véhicule automobile (10) ; et
la suggestion de réglage comportant l'engagement de l'essieu d'entraînement et/ou du moteur de moyeu de roue afin d'augmenter la traction du véhicule automobile (10).

5. Procédé selon l'une des revendications précédentes :
l'au moins un composant de véhicule comportant un auxiliaire de démarrage en côte automatique ; et
la suggestion de réglage comportant l'activation de l'auxiliaire de démarrage en côte automatique, de préférence afin d'empêcher le véhicule automobile (10) de reculer sur une pente.

6. Procédé selon l'une des revendications précédentes, comprenant en outre les étapes suivantes :
évaluer les données acquises en termes de topologie de terrain et/ou de flux de circulation dans l'environnement du véhicule automobile (10) ; et
délivrer une suggestion de réglage afin d'adapter un fonctionnement, de préférence des limites de vitesse supérieure et/ou inférieure, d'une installation de régulation de vitesse automatique du véhicule automobile (10), la suggestion de réglage étant délivrée à l'aide de l'interface homme-machine (22).

7. Procédé selon l'une des revendications précédentes, comprenant en outre les étapes suivantes :
évaluer les données acquises en termes de capacité d'activation d'une sortie d'entraînement auxiliaire d'une unité d'entraînement (16) du véhicule automobile (10) ; et
délivrer une suggestion de réglage afin d'activer la sortie d'entraînement auxiliaire sur la base de l'évaluation, la suggestion de réglage étant délivrée à l'aide de l'interface homme-machine (22).

8. Procédé selon la revendication 7 :
une carrosserie (12) du véhicule automobile (10) pouvant être entraînée au moyen de la sortie d'entraînement auxiliaire ; et/ou
l'activation de la sortie d'entraînement auxiliaire n'étant autorisée que dans des conditions de fonctionnement prédéterminées du véhicule automobile (10) .

9. Procédé selon l'une des revendications précédentes, comprenant en outre les étapes suivantes :
évaluer les données acquises en termes de capacité d'activation, d'augmentation de la sécurité de conduite par l'activation et/ou de réduction de la consommation du véhicule automobile (10) par l'activation d'un système d'aide à la conduite du véhicule automobile (10) ; et
délivrer une suggestion de réglage afin d'activer le système d'aide à la conduite sur la base de l'évaluation, la suggestion de réglage étant délivrée à l'aide de l'interface homme-machine (22).

10. Procédé selon l'une des revendications précédentes, comprenant en outre les étapes suivantes :
évaluer les données acquises en termes de temps de conduite du conducteur du véhicule automobile (10), qui est de préférence spécifié au moyen d'un tachygraphe du véhicule automobile (10) ; et
délivrer une suggestion de réglage afin de régler un arrêt intermédiaire, de préférence sur une aire de repos, dans un système de navigation du véhicule automobile (10) sur la base de l'évaluation, la suggestion de réglage étant délivrée à l'aide de l'interface homme-machine (22).

11. Procédé selon l'une des revendications précédentes, comprenant en outre les étapes suivantes :
évaluer les données acquises en termes d'engagement d'une marche arrière du véhicule automobile (10) ; et
délivrer une suggestion de réglage afin d'activer, de désactiver et/ou de régler le volume d'un dispositif d'avertissement de marche arrière du véhicule automobile (10) sur la base de l'évaluation, la suggestion de réglage étant délivrée à l'aide de l'interface homme-machine (22).

12. Procédé selon l'une des revendications précédentes, comprenant en outre les étapes suivantes :
évaluer les données acquises en termes de conditions d'éclairage dans l'environnement du véhicule automobile (10) et/ou de réglage d'éclairage du véhicule automobile (10) ; et
délivrer une information de fonctionnement et/ou une suggestion de réglage afin d'activer, de désactiver et/ou de régler l'éclairage du véhicule automobile (10) sur la base de l'évaluation, l'information de fonctionnement et/ou la suggestion de réglage étant délivrée à l'aide de l'interface homme-machine (22).

13. Procédé selon l'une des revendications précédentes, comprenant en outre les étapes suivantes :
évaluer les données acquises en termes de fonctionnement et/ou d'activation souhaitée d'un système de maintenance du véhicule automobile (10) ; et
délivrer une information de fonctionnement et/ou une suggestion de réglage afin d'activer, de désactiver et/ou d'adapter un fonctionnement du système de maintenance du véhicule automobile (10) sur la base de l'évaluation, l'information de fonctionnement et/ou la suggestion de réglage étant délivrées à l'aide de l'interface homme-machine (22).

14. Procédé selon l'une des revendications précédentes, comprenant en outre les étapes suivantes :
évaluer les données acquises en termes de fonctionnement d'un système de confort du véhicule automobile (10) ; et
délivrer une information de fonctionnement et/ou une suggestion de réglage afin d'adapter le fonctionnement du système de confort du véhicule automobile (10) sur la base de l'évaluation, l'information de fonctionnement et/ou la suggestion de réglage étant délivrées à l'aide de l'interface homme-machine (22).

15. Procédé selon l'une des revendications précédentes, comprenant en outre les étapes suivantes :
évaluer les données acquises en termes de fonctionnement d'un système d'interface ; et
délivrer une information de fonctionnement et/ou une suggestion de réglage afin d'adapter le fonctionnement du système d'interface du véhicule automobile (10) sur la base de l'évaluation, l'information de fonctionnement et/ou la suggestion de réglage étant délivrées à l'aide de l'interface homme-machine (22).

16. Procédé selon l'une des revendications précédentes :
le type, l'étendue et/ou le contenu de la délivrance de la suggestion de réglage et/ou de l'interface homme-machine (22) pouvant être réglés par un opérateur du véhicule automobile (10), l'adaptation pouvant être de préférence mémorisée dans un profil utilisateur transférable entre différents véhicules automobiles (10).

17. Procédé selon l'une des revendications précédentes :
l'évaluation ayant été créée par auto-apprentissage et/ou pouvant être adaptée par auto-apprentissage, de préférence sur la base de réglages manuels antérieurs qui sont corrélés avec des données acquises précédemment ; et/ou
le type, l'étendue et/ou le contenu de la délivrance de la suggestion de réglage et/ou de l'interface homme-machine (22) ayant été créés par auto-apprentissage et/ou pouvant être adaptés par auto-apprentissage, de préférence en fonction de réglages manuels précédents de l'interface homme-machine (22).

18. Procédé selon l'une des revendications précédentes :
l'évaluation étant effectuée afin de reconnaître au moins une situation de conduite prédéterminée dans les données, la suggestion de réglage étant associée à au moins une situation de conduite prédéterminée.

19. Véhicule automobile (10), de préférence véhicule utilitaire, conçu pour mettre en œuvre un procédé selon l'une des revendications précédentes.
